# EUROPÄISCHE PATENTSCHRIFT

(11) **EP 1 679 568 B1**
(45) Veröffentlichungstag und Bekanntmachung des Hinweises auf die Patenterteilung: **26.11.2008**
(21) Anmeldenummer: 06100117.8
(22) Anmeldetag: 05.01.2006
(51) Int. Cl.: G05D 7/01

(54) **Durchflussmengenregler**
Flow regulator
Régulateur de débit

(30) Priorität: 08.01.2005 DE 102005001073
(43) Veröffentlichungstag der Anmeldung: 12.07.2006
(73) Patentinhaber: Kahrs, Johann, 27729 Hambergen (DE)
(72) Erfinder: Ivarson, Per, 51335 Fristad (SE); Gerken, Hans-Jürgen, 27607 Langen-Imsum (DE); Wikstrand, Fredrik, 41268 Göteborg (SE)
(74) Vertreter: Eisenführ, Speiser & Partner

(56) Entgegenhaltungen:
- EP-A- 0 270 284
- EP-A- 0 936 522
- US-A- 3 435 843

## Beschreibung

Die Erfindung betrifft einen Durchflussmengenregler zur Regelung der Durchflussmenge eines Fluids mit einem Gehäuse mit einem in dem Gehäuse entlang einer Strömungsrichtung beweglich gelagerten Kolben, der entgegen einer Hauptströmungsrichtung durch ein elastisches Element belastet ist.

Durchflussmengenregler sind seit einiger Zeit in verschiedenen Ausführungsformen im Einsatz. Aufgabe der Durchflussmengenregler ist zumeist die Reduktion der Fluiddurchflussmenge, um hierdurch beispielsweise Wasser und somit letztlich Kosten zu sparen. Die Durchflussmengenregler werden zumeist an Wasserhähne anstelle des üblichen Diffusors oder an eine Duscharmatur zwischen der Duscharmatur und den Brauseschlauch geschraubt.

Übliche Durchflussmengenregler wirken lediglich als Durchflussmengenbegrenzer. Durch eine Drossel im Durchflussmengenregler wird der Durchflussquerschnitt für das Wasser reduziert, so dass nur eine geringere Menge an Wasser durchfließen kann. Nachteilig bei diesen Durchflussmengenreglern ist, dass in Abhängigkeit des Vordrucks, das heisst, des in der Wasserleitung herrschenden Wasserdrucks, auch die Durchflussmenge variiert. Zum Beispiel in den Morgenstunden, wenn in vielen Haushalten geduscht wird, nimmt der Wasserdruck im kommunalen Wassernetz stark ab, so dass die zur Verfügung stehende Durchflussmenge ohnehin schon stark reduziert ist. Diese wird durch den bekannten Durchflussmengenregler weiter reduziert, so dass die zur Verfügung stehende Durchflussmenge oft nicht mehr ausreicht, um beispielsweise zu duschen. In Zeiten, in denen hingegen wenig Wasser verbraucht wird, ist der Wasserdruck im kommunalen Wasserleitungsnetz sehr hoch, so dass auch eine entsprechend große Durchflussmenge zur Verfügung steht. Hier ist die Durchflussmenge trotz der bekannten Durchflussmengenregler oft noch so groß, dass sie weiter reduziert werden könnte. Bei den bekannten Durchflussmengenreglem muss stets ein Kompromiss zwischen Phasen niedrigen und hohen Drucks eingegangen werden. Die bekannten Einrichtungen verdienen daher eigentlich nicht den Namen Durchflussmengenregler, sondern müssten genau genommen als Durchflussbegrenzer bezeichnet werden.

Weitere Durchflussmengenregler sind aus der SE 393 848 und anderen Dokumenten bekannt. Beispielsweise zeigt die EP 0 936 522 einen Durchflussmengenregler in einer weiteren Ausführungsform. Durch die Strömung des Fluids, beispielsweise des Wassers, wird ein Kolben gegen den Widerstand eines elastischen Elements in Hauptströmungsrichtung bewegt. Durch die Positionsveränderung des Kolbens wird der Strömungswiderstand des Durchflussmengenreglers derart verändert, dass die Durchflussgeschwindigkeit im wesentlichen unabhängig vom Vordruck ist.

Nachteilig ist an den oben beschriebenen Durchflussmengenreglem, dass in jedem Zustand des Durchflussmengenreglers, insbesondere ohne oder bei nur langsamer Strömung, die Möglichkeit besteht, dass Verunreinigungen oder Mikroorganismen aus dem Bereich, der in Hauptströmungsrichtung hinter dem Durchflussmengenregler liegt, in den Bereich vor dem Durchflussmengenregler gelangen und das Fluid verunreinigen. Vor allem im Lebensmittelbereich sind Verunreinigungen oder Kontaminationen von Fluiden durch Mikroorganismen nach Möglichkeit zu vermeiden. Weiterhin besteht bei den bekannten Durchflussmengenreglern das Problem, dass sich im Ruhezustand in einer Leitung, in der der Durchflussmengenregler eingebaut ist und deren Durchfluss von ihm geregelt wird, und im Durchflussmengenregler befindliches, u.U. druckloses Fluid durch den Durchflussmengenregler austreten und beispielsweise durch Luft ersetzt werden kann. Diese Gefahr besteht bei Wasserleitungen insbesondere dann, wenn in der Leitung ein Unterdruck gebildet wird, beispielsweise durch einen Rohrbruch oder bei hoher Wasserentnahme (z. B. zur Feuerbekämpfung). Dies kann etwa zu unerwünschter Korrosion und Wachstum von Mikroben in der Leitung in Hauptströmungsrichtung vor dem Durchflussmengenregler führen.

Eine der Erfindung zugrunde liegende Aufgabe ist es, einen Durchflussmengenregler bereitzustellen, der es vermeidet, dass Verunreinigungen oder Mikroorganismen durch den Durchflussmengenregler in den Bereich gelangen, der sich in Hauptströmungsrichtung vor dem Durchflussmengenregler befindet. Weiterhin ist es eine Aufgabe, die der Erfindung zugrunde liegt, einen Durchflussmengenregler bereitzustellen, der verhindert, dass ungewollt Fluid durch den Durchflussmengenregler austritt.

Die Aufgaben werden gelöst durch einen Durchflussmengenregler zur Regelung der Durchflussmenge eines Fluids, mit einem Gehäuse mit einem in dem Gehäuse entlang einer Strömungsrichtung beweglich gelagerten Kolben, der entgegen einer Hauptströmungsrichtung durch ein elastisches Element belastet ist, wobei in dem Gehäuse ferner ein Sitz vorgesehen ist, mit dem der Kolben durch das elastische Element in dichtenden Kontakt gebracht werden kann, um das Fluid, das sich in Hauptströmungsrichtung hinter dem Sitz befindet, von dem Fluid zu trennen, das sich vor dem Sitz befindet.

Der Erfindung liegt die Einsicht zugrunde, dass das elastische Element, das zur Verwirklichung der Eigenschaften des Durchflussmengenreglers in Bezug auf das Regeln der Durchflussmenge verwendet wird, auch dazu Verwendung finden kann, eine Abdichtung des Durchflussmengenreglers und damit eine Unterteilung des Fluids in zwei Teile zu ermöglichen. Durch das elastische Element wird der Kolben mit dem Sitz in Kontakt gebracht, so dass, wenn keine Strömung vorliegt bzw. kein höherer Druck durch das Fluid auf den Kolben aufgebracht wird als der vom elastischen Element ausgeübte Druck, der Kolben mit dem Sitz dichtend abschließt. Durch das dichtende Abschließen wird zum einen verhindert, dass Verunreinigungen oder Mikroorganismen in den Leitungsbereich in Hauptströmungsrichtung vor dem Durchflussmengenregler gelangen können, und zum anderen wird sichergestellt, dass Fluid nicht unbeabsichtigt aus der Leitung durch den Durchflussmengenregler austritt und durch ein anderes Fluid wie beispielsweise Luft teilweise ersetzt und/oder verunreinigt wird.

Gemäß einer vorteilhaften Ausgestaltung des erfindungsgemäßen Durchflussmengenreglers kann der Kolben mit dem Sitz in dichtenden Kontakt gebracht werden kann, um eine Strömung des Fluids durch das Gehäuse des Durchflussmengenreglers entgegen der Hauptströmungsrichtung zu verhindern. Wenn Sitz und Kolben entsprechend ausgestaltet sind, wird auch dann eine mögliche Kontamination der Leitung bzw. des Fluids vor dem Durchflussmengenregler verhindert, wenn das Fluid in bzw. in Hauptströmungsrichtung hinter dem Durchflussmengenregler einen höheren Druck aufweist als das Fluid vor dem Durchflussmengenregler. Hierbei kann vorgesehen sein, dass Sitz und Kolben durch diesen Druckunterschied aufeinandergepresst werden und somit die Dichtung sich unter Druck verstärkt. Im Fall eines Druckverlustes durch einen Leitungsbruch wird ein Rückfließen von durch den Durchflussmengenregler durchgetretenem Fluid wirksam verhindert. So kann etwa durch eine Schlauchdüse verändertes oder belastetes Wasser aus einer Badewanne nicht durch den Durchflussmengenregler hindurch in eine Trinkwasserleitung gelangen, auch wenn bei hoher Netzbelastung, die beispielsweise im Fall von Wasser bei einer Entnahme von Löschwasser durch die Feuerwehr auftreten kann, sich vor dem Durchflussmengenregler ein Unterdruck ausbildet.

Es ist in bevorzugten Ausgestaltungen möglich, beispielsweise zwei oder mehr erfindungsgemäße Durchflussmengenregler in Serie zu schalten und auf diese Weise eine Doppelsicherung zu erhalten. Weiterhin besteht die Möglichkeit, in einem erfindungsgemäßen Durchflussmengenregler eine Doppelsicherung durch eine zwei- oder mehrfache Ausgestaltung eines Rückflussverhinderers auszugestalten, insbesondere an mehreren Stellen im Durchflussmengenregler eine Abdichtung durch einen oder mehrere Teile des Kolbens mit einem oder mehreren entsprechenden Sitzen vorzusehen. Zudem kann der erfindungsgemäße Durchflussmengenregler, der einen Rückstrom des Fluids verhindert, mit einem Durchflussrohrbelüfter kombiniert werden.

In einer weiteren Ausgestaltung weisen der Kolben und/oder der Sitz ein elastisches Dichtungsmittel an ihrer jeweiligen Kontaktfläche auf, insbesondere ein Dichtungsmittel aus Gummi. Mit der Verwendung eines elastischen Dichtungsmittels wird die Dichtwirkung nochmals verbessert.

Bevorzugt ist dabei das Dichtungsmittel fest mit dem Kolben und/oder dem Sitz verbunden. Durch die feste Verbindung wird sichergestellt, dass das Dichtungsmittel stets seine Aufgabe erfüllen kann. Durch beispielsweise ein Verrutschen des Dichtungsmittels würde die Dichtwirkung ggf. wesentlich beeinträchtigt werden.

In einer bevorzugten Ausgestaltung weist der Kolben an seinem dem Sitz zugewandten Ende einen Absatz zum abdichtenden Inkontakttreten mit dem Sitz auf. Durch diesen Absatz wird einerseits eine Abstützung des ggf. am Kolben vorgesehen Dichtungsmittel ermöglicht und andererseits erlaubt, dem Kolben selbst eine zusätzliche Führung zu geben, so dass Kolben und Sitz bestmöglich miteinander abdichten.

In einer weiteren Ausgestaltung weist der Kolben an seinem dem Sitz zugewandten Ende entgegen der Hauptströmungsrichtung einen konvexen Querschnitt auf. Durch das Ende mit einem konvexen Querschnitt, also mit einer Wölbung, die sich entgegen der Hauptströmungsrichtung erstreckt, ist sichergestellt, dass Kolben und Sitz auch dann miteinander dichtend in Kontakt treten können, wenn Kolben und Sitz gegeneinander verschoben sind, also beispielsweise ihre Mittelachsen nicht zusammenfallen oder gegeneinander verdreht sind.

In einer bevorzugten Ausgestaltung des erfindungsgemäßen Durchflussmengenregler sind im Betrieb das dem Sitz zugewandte Ende des Kolbens und der Sitz so voneinander beabstandet, dass sich eine Strömungsgeschwindigkeit des Fluids einstellt, die ausreicht, das Ende des Kolbens und/oder den Sitz von Ablagerungen, insbesondere Schmutzablagerungen, reinzuhalten und/oder zu befreien. Wenn das Ende des Kolbens oder der Sitz mit Schmutzablagerungen oder Anhaftungen von Mikroorganismen verschmutzt sind, werden die Dichtungseigenschaften beeinträchtigt. Durch eine geeignete Strömungsgeschwindigkeit kann sichergestellt werden, dass im Betrieb die potentiellen Ablagerungen sich entweder nicht am Sitz und/oder Ende des Kolbens anlagern können oder fortgespült werden, so dass eine ausreichende Dichtung erhalten bleibt.

In einer weiteren Ausgestaltung sind der Kolben im wesentlichen aus einem formstabilen Material, insbesondere Metall und/oder Kunststoff, und der Sitz im wesentlichen aus einem formstabilen Material, insbesondere Metall und/oder Kunststoff, und/oder einem elastischen Material, insbesondere Gummi, gebildet. Durch die Formstabilität, also die Beständigkeit gegen hier ungewollte Verformungen, des Kolben und eine entsprechende Ausführung des Sitzes bleiben die äußere Form des Kolbens und damit die Strömungseigenschaften des Kolben über die Betriebsdauer (bei kalkarmen Wasserleitungen üblicherweise 3 bis 6 Jahre) erhalten, so dass nicht mit einer Veränderung der Durchflussmengenregelung oder gar mit der Notwendigkeit einer Nachjustierung zu rechnen ist. Kolben und Sitz sind vorzugsweise so ausgebildet, dass zwischen ihnen ein kreisförmiger Ringspalt entsteht, wenn sich das Fluid in Hauptströmungsrichtung durch den Durchflussmengenregler bewegt.

In einer bevorzugten Ausgestaltung ist der Kolben im wesentlichen aus einem erosions- und/oder kavitationsbeständigen Material gebildet, vorzugsweise einem Sondermetall. Aufgrund der z.T. hohen Strömungsgeschwindigkeiten im Inneren des Durchflussmengenreglers besteht die Gefahr einer Erosion oder - im Falle einer Flüssigkeit - des Auftretens von Gas- oder Dampfblasen aufgrund von Kavitation. Durch eine geeignete Wahl des Kolbenmaterials lassen sich diese schädlichen Einflusse verhindern bzw. werden deren Wirkungen unterdrückt.

Der erfindungsgemäße Durchflussmengenregler ist insbesondere zur Verwendung mit einer Flüssigkeit als Fluid geeignet, dies gilt besonders für die Verwendung mit Wasser. Gerade bei Anwendungen, in denen Wasser verwendet wird, sind Durchflussmengenregler von besonderem Nutzen, da sei einen wichtigen Posten beispielsweise von Betriebskosten eines Untemehmens senken helfen.

Das in den Durchflussmengenregler einströmende Fluid weist bevorzugt einen Druck von weniger als 10 bar auf. Die in diesem Druckbereich auftretenden Kräfte lassen sich mit vergleichsweise einfachen Mitteln beherrschen, wobei auch für höhere Drücke der erfindungsgemäße Durchflussmengenregler unter der Vorraussetzung einer entsprechend stabilen und widerstandsfähigen Auslegung Verwendung finden kann.

Gemäß einer weiteren Ausgestaltung umfasst der erfindungsgemäße Durchflussmengenregler ferner in einer dem Sitz abgewandten unteren Gehäuseteil eine Mengenausgleichskammer, die ausgebildet ist mit einer Ausnehmung in einem Bodenstück, das in dem unteren Gehäuseteil angeordnet ist, und eine Achse, die die Kolben trägt und durch einen Führungsring und das Bodenstück geführt wird. Die Mengenausgleichskammer ist vorzugsweise mit einem Stauraum ausgebildet, so dass in Hauptströmungsrichtung entlang des Kolbens austretendes Fluid im Wesentlichen tangential auf eine Wand der Mengenausgleichskammer trifft und dort umgelenkt wird. Dadurch ändert sich der Strömungswiderstand des Fluids dynamisch mit steigender Eintrittsgeschwindigkeit des Fluids in den Stauraum, wodurch die Geräuschentwicklung bei Betrieb des Durchflussmengenbegrenzers gegenüber herkömmlichen Durchflussmengenbegrenzern verringert und insbesondere die Grenzwerte der DIN 4109 eingehalten werden.

Weitere vorteilhafte Ausgestaltungen, insbesondere zum Sicherstellen einer konstanten Durchflussmenge entnimmt der Fachmann der EP 0 936 522 A1.

Im folgenden wird die Erfindung anhand von Ausführungsbeispielen und Zeichnungen näher erläutert, hierbei zeigen:
- Fig.1: eine erste Ausführungsform des erfindungsgemäßen Durchflussmengenreglers und
- Fig. 2: eine zweite Ausführungsform des Kolbens und des Sitzes eines erfindungsgemäßen Durchflussmengenreglers.

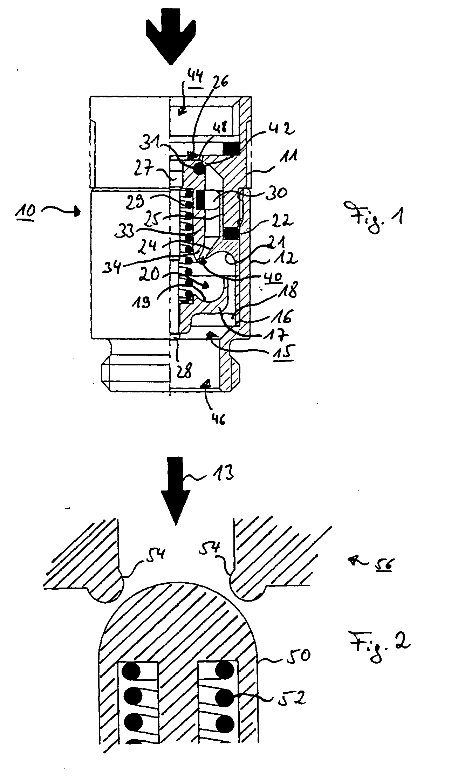

Fig. 1 zeigt eine erste Ausführungsform des erfindungsgemäßen Durchflussmengenreglers. Der Durchflussmengenregler weist ein Gehäuse 10 auf, welches aus einem oberen Gehäuseteil 11 und einem unteren Gehäuseteil 12 gebildet ist. Das obere und untere Gehäuseteil 11 und 12 sind miteinander verbunden, etwa durch eine Verschraubung. Das obere Gehäuseteil 11 stellt das der Hauptströmungsrichtung 13 entgegengerichtete Teil des Gehäuses 10 dar, während der untere Gehäuseteil 12 strömungsabwärts davon angeordnet ist. Das obere Gehäuseteil 11 weist Mittel auf, mittels derer der Durchflussmengenregler an eine Leitung (nicht gezeigt) angeschlossen werden kann. Entsprechend weist der untere Gehäuseteil 12 Mittel auf zum Anschluss an eine Leitung (nicht gezeigt). Die Mittel 11 und 12 können insbesondere Gewinde zum Anschrauben in eine Leitung oder Flauschverbindungsstücke umfassen. Der untere Gehäuseteil 12 kann auch derart ausgestaltet sein, dass dessen Ende auch das Ende der Leitungsführung darstellt, beispielsweise am Ausfluss einer Wasserleitung oder Wasserhahnes.

In dem unteren Gehäuseteil 12 ist ein Einsatz 15 angeordnet. Dieser besteht einstückig aus einem äußeren Ring 16 und einem darin angeordneten Bodenstück 17, welches über Stege 18 mit dem Ring 16 verbunden ist. Durch Öffnungen zwischen dem Ring 16 und dem Bodenstück 17 kann das Fluid hindurchströmen.

Das Bodenstück 17 selbst weist auf seiner angeströmten Seite eine umlaufende Ausnehmung 19 auf. Diese bildet eine Mengenausgleichskammer (Stauraum) 20 im Bodenstück 17.

Der Ring 16 erstreckt sich entgegen der Hauptströmungsrichtung 13 über das Bodenstück 17 hinaus und weist an seiner Innenseite eine vom Bodenstück 17 wegweisende konkave Innenfläche 21 auf, die nach innen vorspringt und die Mengenausgleichskammer 20 begrenzt. Die konkave Innenfläche 21 geht in eine kegelstumpfartige Ringfläche 24 über, die sich entgegen der Hauptströmungsrichtung aufweitet. Der Ring 16 erstreckt sich mit einem Ansatz 25 weiterhin entgegen der Hauptströmungsrichtung 13 in das obere Gehäuseteil 11 hinein, zwischen dem und dem unteren Gehäuseteil 12 eine Dichtung 22 vorgesehen ist.

Innerhalb des Gehäuses 10 ist ein Kolben 26 auf- und abbewegbar, also in Hauptströmungsrichtung 13 bewegbar gelagert. Der Kolben 26 ist zu diesem Zweck auf einer Achse 27 befestigt. Der Kolben 26 ist dabei durch eine Art Nietverbindung auf der Achse 27 befestigt, indem der Kolben 26 auf die Achse 27 gesteckt und sodann die Achse 27 am oberen Ende gestaucht wird. Der Kolben 26 wird so kraftschlüssig auf der Achse 27 fixiert. Die Achse 27 ist durch eine Bohrung im Einsatz 15, nämlich in dessen Bodenstück 17, hindurchgeführt und durch einen Sicherungsring 28 unterhalb des Bodenstücks 17 gesichert. Durch ein elastisches Element, nämlich eine Schraubenfeder 29, ist der Kolben 26 nach oben vorgespannt, also entgegen der Hauptströmungsrichtung 13 des Fluids. Durch einen Führungsring 30 ist der Kolben 26 im Gehäuse 10 am Ansatz 25 des Ringes 16 geführt. Der Führungsring 30 sitzt dabei in einer Ringnut am Kolben 26 und ist mittels im vorliegenden Falle vier sternförmig nach außen weisenden Stegen am Ansatz 25 geführt.

Der Kolben 26 selbst weist in seinem oberen Bereich eine Ausnehmung zur Aufnahme einer Kolbendichtung 31, einen unterhalb dieser Ausnehmung angeordneten zylindrischen Bereich 33 und unterhalb dieses zylindrischen Bereichs 33 sich in Strömungsrichtung 13 verjüngenden kegelstumpfartigen Kolbenbereich 34 auf. Zwischen dem Kolbenbereich 34 und der Ringfläche 24 befindet sich ein Ringraum 40, durch das Fluid auf dem Weg durch den Durchflussmengenregler hindurchfließt.

In Folge der Bewegung des Kolbens 26 in Strömungsrichtung 13 verringert sich das Volumen der Mengenausgleichskammer 20. Hierdurch ändert sich das Strömungsverhalten des Fluids durch den Durchflussmengenregler, so dass sich auch der Strömungswiderstand ändert. Je größer der Vordruck des Fluids ist, desto kleiner wird dabei das Volumen der Mengenausgleichskammer 20 und folglich der Strömungswiderstand größer. Entsprechend wird eine geringere Menge Fluid durchgelassen. Weiterhin verkleinert sich der Ringraum 40 um den Kolben 26, genauer zwischen dem Kolbenbereich 34 und der Ringfläche 24, in Folge der Bewegung des Kolbens 26 in Strömungsrichtung 13. Der Ringraum 40 um den Kolben 26 bildet einen drosselnden Durchfluss für das Fluid. Je nach Vordruck wird der Kolben 26 gegen das elastische Element in Strömungsrichtung 13 des Fluids gedrückt. Je größer der Vordruck ist, desto kleiner wird der freie Querschnitt des Ringraums 40. Somit erhöht sich in Abhängigkeit der Vordruck die Drosselwirkung des Durchflussmengenreglers. Die Durchflussmenge durch den Durchflussmengenregler wird durch die beiden zusammenwirkenden Wirkungen des verringerten Ringraums 40 und des erhöhten Strömungswiderstand des Mengenausgleichskammer 20 konstant gehalten. Durch geeignete Ausgestaltungen ist es allerdings auch möglich, auf eine der beiden Wirkungen zu verzichten und nur eine zu nutzen. Weitere Möglichkeiten der Ausführung sind beispielsweise aus EP 0 936 522 bekannt.

Der Kolben 26 wird durch die Federkraft der Feder 29 gegen die Hauptströmungsrichtung 13 belastet. Im Ruhezustand, d.h. wenn das Fluid oberhalb des Durchflussmengenreglers drucklos oder nahezu drucklos ist, wird die Kolbendichtung 31 durch die Feder 29 gegen einen Sitz 42 des oberen Gehäuseteils gedrückt und dichtet somit den Bereich 44 oberhalb des Durchflussmengenreglers gegenüber dem Bereich 46 innerhalb und unterhalb des Durchflussmengenreglers ab. Der Durchflussmengenregler kann durch eine geeignete Wahl der Ausgestaltungen von Kolben 26 und Sitz 42 sowie der Feder 29 so ausgestaltet sein, dass Kolben und Sitz nur gerade dann abdichten, wenn das Fluid oberhalb drucklos oder nahezu drucklos ist. Andererseits kann auch vorgesehen sein, dass das Fluid einen bestimmten Grunddruck erreichen muss, bevor sich aufgrund dieses Druckes Kolbendichtung 31 und Sitz 42 voneinander lösen und der Durchflussmengenregler damit durchlässig wird. In Fig. 1 liegt die Dichtung 31 am Sitz 42 an, es fließt also kein Fluid.

Der Kolben 26 weist weiterhin an seinem der Hauptströmungsrichtung 13 entgegenliegenden Ende einen Absatz 48 auf, der in Zusammenwirken mit dem Sitz 42 die Dichtung 31 an den Sitz 42 führt. Dies unterstützt die Führung durch den Führungsring 30.

Bei der in Figur 1 dargestellten speziellen Mengenausgleichskammer 20 wird in Verbindung mit dem entsprechend ausgeführten Ringraum 40 verhindert, dass es im Betrieb mit Flüssigkeiten zu Gas- bzw. Dampfbildung, beispielsweise aufgrund von Kavitation, kommt. Die genaue Abstimmung der Ausnehmung 19 mit der Innenfläche 21 bewirkt eine Rezirkulation des Fluids in die hierbei als Stauraum wirkenden Mengenausgleichskammer 20. Durch die tangentiale Ausbildung der Mengenausgleichskammer 20 wird bewirkt, dass sich der Strömungswiderstand bei Reduzierung des Ringraums 40 bei steigender Eintrittsgeschwindigkeit des Fluids dynamisch verändert. Dadurch wird der Pegel eventuell entstehender Geräusche signifikant reduziert und zudem verhindert, dass sich etwa Bakterien, wie z.B. Legionellen, anlagern können. Üblicherweise kommt es bei bekannten Durchflussmengenreglem durch Hohlsog und unkalkulierbare Wirbelbildung im unteren Regelbereich zu Kavitationsgeräuschen sowie Durchflussgeräuschen. Die erfindungsgemäße Konstruktion stellt dagegen sicher, dass der erfindungsgemäße Durchflussmengenregler innerhalb der durch DIN 4109 gegebenen Grenzen arbeitet.

Fig. 2 zeigt eine zweite Ausführungsform eines Kolbens 50 und eines Sitzes 54 eines erfindungsgemäßen Durchflussmengenreglers. Dargestellt ist nur der Kolben 50 mit der Feder 52, die den Kolben entgegen der Hauptströmungsrichtung 13 belastet und gegen den Sitz 54 des oberen Gehäuseteils 56 drückt. Im weiteren entspricht der Durchflussmengenregler dem in Fig.1 gezeigten.

Der Kolben 50 ist an seinem der Strömungsrichtung 13 entgegengelegen Ende derart ausgestaltet, das er in Richtung auf den Sitz 54 eine konvexe Querschnittsfläche aufweist. Das Ende des Kolben 50 ist also entgegen der Richtung 13 der Strömung vom Kolben aus gesehen nach außen gewölbt. Der Sitz 54 ist mit einer entsprechenden, ebenfalls konvexen Rundung, einem Ringwulst, versehen, so dass auch bei einer Verkippung des Kolbens 50 gegenüber dem Sitz 54 in jedem Falle Kolben 50 und Sitz 54 miteinander in dichtenden Kontakt treten können. In Fig. 2 ist der Kolben 50 vom Sitz 54 entfernt dargestellt, es fließt also ein Fluid durch den Durchflussmengenregler in Richtung der Hauptströmung 13. Hierbei kann vorgesehen sein, dass der Abstand zwischen Kolben 50 und Sitz 54 so bemessen ist, dass Kolben 50 und Sitz 54 durch das strömende Fluid von Ablagerungen oder Anhaftungen befreit werden. Eine solche Befreiung kann auch erreicht werden, wenn der Durchflussmengenregler, insbesondere Kolben, Sitz und Feder, so ausgestaltet ist, dass die Strömungsgeschwindigkeit des Fluids nur für einen begrenzten Zeitraum derart hoch ist, dass Ablagerungen oder Anhaftungen fortgespült werden, etwa in dem Zeitraum, in dem sich der Kolben gerade erst vom Sitz gelöst hat und der Durchflussmengenregler sich noch nicht im Gleichgewicht befindet. Im restlichen Betriebszeitraum kann die Strömungsgeschwindigkeit noch hoch genug sein, um die Bildung neuer Ablagerungen oder Anhaftungen zu vermeiden. Wenn beispielsweise der Durchflussmengenregler am Ausfluss eines Wasserhahn vorgesehen ist, um die ausfließende Menge Wasser zu regeln, so steht das Wasser bei geschlossenem Wasserhahn in wesentlichem drucklos beim Durchflussmengenregler an. Der Kolben wird somit durch das elastische Element gegen den Sitz gedrückt und der Durchflussmengenregler verhindert eine Passage von Wasser oder Luft durch ihn hindurch. Wird nun der Wasserhahn geöffnet wird der Kolben auch durch den anstehenden Wasserdruck belastest. Sobald die durch den Wasserdruck ausgeübte Kraft größer ist als die durch das elastische Element, also beispielsweise durch eine Feder, ausgeübte Kraft, wird sich der Durchflussmengenregler öffnen. Insbesondere zu Beginn des Öffnungsvorgangs ist der Zwischenraum zwischen Kolben und Sitz sehr klein. Es fließt nun bereits ein Teil des Wassers zwischen Kolben und Sitz hindurch, wobei sich aufgrund des herrschenden Wasserdrucks eine der Öffnung entsprechende Strömungsgeschwindigkeit des Wassers ergibt. Bis sich aufgrund der wirkenden Kräfte ein Gleichgewicht und damit ein stabiler Öffnungszustand des Durchflussmengenreglers eingestellt hat, ist die Öffnung zwischen Kolben und Sitz noch kleiner als im Betriebszustand. Damit ergibt sich während des Öffnungsvorgangs eine höhere Strömungsgeschwindigkeit zwischen Kolben und Sitz als im Betriebszustand.

Durch die Erfindung wird ein Durchflussmengenregler vorgestellt, der es im Betriebszustand erlaubt, eine vorbestimmte Menge Fluid beispielsweise aus einer Leitung zu entnehmen, wobei die Menge im Rahmen der üblichen Betriebsdrücke unabhängig vom Vordruck eingehalten wird. Hierbei ist sichergestellt, dass der Bereich vor dem Durchflussmengenregler nicht durch den Durchflussmengenregler kontaminiert werden kann, da im Ruhezustand ein Kolben und ein Sitz miteinander aufgrund einer Belastung durch ein elastisches Element in dichtendem Kontakt stehen und somit das Fluid vor dem Sitz von dem Fluid hinter dem Sitz trennen und ggf. auch eine Rückströmung entgegen der Hauptströmungsrichtung verhindern.

## Patentansprüche

1. Durchflussmengenregler zur Regelung der Durchflussmenge eines Fluids, mit einem Gehäuse (10) mit einem in dem Gehäuse (10) entlang einer Strömungsrichtung (13) beweglich gelagerten Kolben (26, 50), der entgegen einer Hauptströmungsrichtung (13) durch ein elastisches Element (29, 52) belastet ist,
**dadurch gekennzeichnet, dass** in dem Gehäuse (10) ferner ein Sitz (42, 54) vorgesehen ist, mit dem der Kolben (26, 50) durch das elastische Element (29, 52) in dichtenden Kontakt gebracht werden kann, um das Fluid, das sich in Hauptströmungsrichtung (13) hinter dem Sitz (42, 54) befindet, von dem Fluid zu trennen, das sich vor dem Sitz (42, 54) befindet.

2. Durchflussmengenregler nach Anspruch 1,
**dadurch gekennzeichnet, dass** der Kolben (26, 50) mit dem Sitz (42, 54) in dichtenden Kontakt gebracht werden kann, um eine Strömung des Fluids durch das Gehäuse (10) entgegen der Hauptströmungsrichtung (13) zu verhindern.

3. Durchflussmengenregler nach Anspruch 1 oder 2,
wobei der Kolben (26, 50) und/oder der Sitz (42, 54) ein elastisches Dichtungsmittel (31) an ihrer jeweiligen Kontaktfläche aufweisen, insbesondere ein Dichtungsmittel (31) aus Gummi.

4. Durchflussmengenregler nach Anspruch 3,
wobei das Dichtungsmittel (31) fest mit dem Kolben (26, 50) und/oder dem Sitz (42, 54) verbunden ist.

5. Durchflussmengenregler nach einem der vorstehenden Ansprüche,
wobei der Kolben (26, 50) an seinem der Hauptströmungsrichtung entgegengewandten Ende einen Absatz (48) zum abdichtenden Inkontakttreten mit dem Sitz (42, 54) aufweist.

6. Durchflussmengenregler nach einem der vorstehenden Ansprüche,
wobei der Kolben (26, 50) an seinem dem Sitz (42, 54) zugewandten Ende entgegen der Hauptströmungsrichtung (13) einen konvexen Querschnitt aufweist.

7. Durchflussmengenregler nach einem der vorstehenden Ansprüche,
wobei im Betrieb das dem Sitz (42, 54) zugewandte Ende des Kolbens (26, 50) und der Sitz (42, 54) so voneinander beabstandet sind, dass sich eine Strömungsgeschwindigkeit des Fluids einstellt, die ausreicht, das Ende des Kolbens (26, 50) und/oder den Sitz (42, 54) von Ablagerungen, insbesondere Schmutzablagerungen, zu befreien.

8. Durchflussmengenregler nach einem der vorstehenden Ansprüche,
wobei der Kolben (26, 50) im wesentlichen aus einem formstabilen Material, insbesondere Metall und/oder Kunststoff, und der Sitz (42, 54) im wesentlichen aus einem formstabilen Material, insbesondere Metall und/oder Kunststoff, und/oder einem elastischen Material, insbesondere Gummi, gebildet sind.

9. Durchflussmengenregler nach Anspruch 8,
wobei der Kolben (26, 50) im wesentlichen aus einem erosions- und kavitationsbeständigen Material, vorzugsweise einem Sondermetall gebildet ist.

10. Durchflussmengenregler nach einem der vorstehenden Ansprüche,
wobei das Fluid eine Flüssigkeit ist, insbesondere Wasser.

11. Durchflussmengenregler nach Anspruch 10,
wobei die in den Durchflussmengenregler einströmende Flüssigkeit einen Druck von weniger als 10 bar aufweist.

12. Durchflussmengenregler nach einem der vorherigen Ansprüche, ferner umfassend
- in einer dem Sitz (42, 54) abgewandten unteren Gehäuseteil (12) eine Mengenausgleichskammer (20), die ausgebildet ist mit einer Ausnehmung in einem Bodenstück (17), das in dem unteren Gehäuseteil (12) angeordnet ist, und
- eine Achse (27), die den Kolben (26, 50) trägt und durch einen Führungsring (30) und das Bodenstück (17) geführt wird.

## Claims

1. Flow volume regulator for regulating the flow volume of a fluid, with a housing (10) with a plunger (26, 50) which is mounted in the housing (10) so that it can move along a direction of flow (13) and is loaded against a main direction of flow (13) by a resilient element (29, 52), **characterised in that** a seat (42, 54) is also provided in the housing (10), with which seat the plunger (26, 50) can be brought into sealing contact by the resilient element (29, 52) in order to separate the fluid which is located after the seat (42, 54) in the main direction of flow (13) from the fluid which is located before the seat (42, 54).

2. Flow volume regulator according to Claim 1,
**characterised in that** the plunger (26, 50) can be brought into sealing contact with the seat (42, 54) in order to prevent the fluid from flowing through the housing (10) against the main direction of flow (13).

3. Flow volume regulator according to Claim 1 or 2,
wherein the plunger (26, 50) and/or the seat (42, 54) comprise(s) a resilient sealing means (31) at their/its respective contact face, in particular a sealing means (31) of rubber.

4. Flow volume regulator according to Claim 3,
wherein the sealing means (31) is firmly connected to the plunger (26, 50) and/or the seat (42, 54).

5. Flow volume regulator according to any one of the preceding Claims, wherein the plunger (26, 50) comprises a shoulder (48) at its end which is turned towards the main direction of flow for coming into sealing contact with the seat (42, 54).

6. Flow volume regulator according to any one of the preceding Claims,
wherein the plunger (26, 50) has a convex cross section towards the main direction of flow (13) at its end which faces the seat (42, 54).

7. Flow volume regulator according to any one of the preceding Claims,
wherein during operation the end of the plunger (26, 50) which faces the seat (42, 54) and the seat (42, 54) are spaced apart so that the fluid reaches a flow speed which is sufficient to free the end of the plunger (26, 50) and/or the seat (42, 54) from deposits, in particular dirt deposits.

8. Flow volume regulator according to any one of the preceding Claims,
wherein the plunger (26, 50) is formed substantially from a dimensionally stable material, in particular metal and/or plastics material, and the seat (42, 54) is formed substantially from a dimensionally stable material, in particular metal and/or plastics material, and/or a resilient material, in particular rubber.

9. Flow volume regulator according to Claim 8,
wherein the plunger (26, 50) is formed substantially from an erosion- and cavitation-resistant material, preferably a special metal.

10. Flow volume regulator according to any one of the preceding Claims,
wherein the fluid is a liquid, in particular water.

11. Flow volume regulator according to Claim 10, wherein the liquid flowing into the flow volume regulator is at a pressure of less than 10 bar.

12. Flow volume regulator according to any one of the preceding Claims,
also comprising
- in a lower housing part (12) remote from the seat (42, 54), a volume equalising chamber (20) which is formed with a recess in a bottom piece (17) which is disposed in the lower housing part (12), and
- a shaft (27) which bears the plunger (26, 50) and is guided through a guide ring (30) and the bottom piece (17).

## Revendications

1. Régulateur de débit quantitatif pour réguler le débit quantitatif d'un fluide, comprenant un boîtier (10) avec un piston (26, 50) monté dans le boîtier (10) en déplacement le long d'une direction d'écoulement (13) et chargé par un élément élastique (29, 52) à l'encontre d'une direction d'écoulement principale (13),
**caractérisé en ce qu'**il est prévu en outre dans le boîtier (10) un siège (42, 54) sur lequel le piston (26, 50) peut être amené à en contact étanche par l'élément élastique (29, 52), afin de séparer le fluide qui se trouve derrière le siège (42, 54) dans la direction d'écoulement principale (13) vis-à-vis du fluide qui se trouve devant le siège (42, 54).

2. Régulateur de débit quantitatif selon la revendication 1,
**caractérisé en ce que** le piston (26, 50) peut être amené en contact étanche sur le siège (42, 54) pour empêcher un écoulement du fluide à travers le boîtier (10) à l'encontre de la direction d'écoulement principale (13),

3. Régulateur de débit quantitatif selon la revendication 1 ou 2,
dans lequel le piston (26, 50) et/ou le siège (42, 54) présentent sur leurs surfaces de contact respectives un agent d'étanchéité élastique (31), en particulier un agent d'étanchéité (31) en caoutchouc.

4. Régulateur de débit quantitatif selon la revendication 3,
dans lequel l'agent d'étanchéité (31) est relié fermement au piston (26, 50) et/ou au siège (42, 54).

5. Régulateur de débit quantitatif selon l'une des revendications précédentes,
dans lequel le piston (26, 50) présente, à son extrémité opposée à la direction d'écoulement principale, un talon (48) destiné à venir en contact étanche avec le siège (42, 54).

6. Régulateur de débit quantitatif selon l'une des revendications précédentes,
dans lequel le piston (26, 50) présente, à son extrémité tournée vers le siège (42, 54), une section convexe opposée à la direction d'écoulement principale (13).

7. Régulateur de débit quantitatif selon l'une des revendications précédentes,
dans lequel, en service, l'extrémité du piston (26, 50) tournée vers le siège (42, 54) et le siège (42, 54) sont éloignés l'un de l'autre de telle sorte qu'il s'établit une vitesse d'écoulement du fluide qui suffit à libérer l'extrémité du piston (26, 50) et/ou le siège (42, 54) de dépôts, en particulier de dépôts de saletés.

8. Régulateur de débit quantitatif selon l'une des revendications précédentes,
dans lequel le piston (26, 50) est réalisé essentiellement en un matériau à forme stable, en particulier en métal et/ou en matière plastique, et le siège (42, 54) est réalisé essentiellement en un matériau à forme stable, en particulier en métal et/ou en matière plastique, et/ou en un matériau élastique, en particulier en caoutchouc.

9. Régulateur de débit quantitatif selon la revendication 8,
dans lequel le piston (26, 50) est réalisé essentiellement en un matériau résistant à l'érosion et à la cavitation, de préférence un métal spécial.

10. Régulateur de débit quantitatif selon l'une des revendications précédentes, dans lequel le fluide est un liquide, en particulier de l'eau.

11. Régulateur de débit quantitatif selon la revendication 10,
dans lequel le liquide qui s'écoule en entrant dans le régulateur de débit quantitatif présente une pression inférieure à 10 bars.

12. Régulateur de débit quantitatif selon l'une des revendications précédentes, comprenant en outre :
- dans une partie de boîtier inférieure (12) détournée du siège (42, 54), une chambre de compensation quantitative (20) qui est réalisée avec un évidement dans une pièce de fond (17), laquelle est agencée dans la partie de boîtier inférieure (12), et
- un axe (27) qui porte le piston (26, 50) et qui est guidé par une bague de guidage (30) et par la pièce de fond (17).
